# EUROPEAN PATENT SPECIFICATION

(11) **EP 2 657 875 B1**
(45) Date of publication and mention of the grant of the patent: **12.02.2020**
(21) Application number: 11850050.3
(22) Date of filing: 20.12.2011
(51) Int. Cl.: G06F 21/00, G06K 19/07, G06K 19/10, G06T 7/00

(54) **AUTHENTICATION CARD, AUTHENTICATION SYSTEM, GUIDANCE METHOD, AND PROGRAM**
AUTHENTIFIZIERUNGSKARTE, AUTHENTIFIZIERUNGSSYSTEM, FÜHRUNGSVERFAHREN UND PROGRAMM
CARTE D'AUTHENTIFICATION, SYSTÈME D'AUTHENTIFICATION, PROCÉDÉ DE GUIDAGE, ET PROGRAMME

(30) Priority: 20.12.2010 JP 2010283423
(43) Date of publication of application: 30.10.2013
(73) Proprietor: NEC Corporation, Tokyo 108-8001 (JP)
(72) Inventor: KODA Yoshinori, Tokyo 108-8001 (JP)
(74) Representative: Betten & Resch
(86) International application number: PCT/JP2011/079556
(87) International publication number: WO 2012/086657

(56) References cited:
- EP-A2- 1 589 491
- WO-A1-2010/086993
- WO-A1-2010/086993
- JP-A- 2000 076 412
- JP-A- 2001 273 498
- JP-A- 2004 137 747
- JP-A- 2006 227 747
- JP-A- 2007 304 823
- US-A1- 2004 062 423
- US-A1- 2004 062 423
- US-A1- 2006 023 919

## Description

### [TECHNICAL FIELD]

The present invention relates to an authentication card, an authentication system, a guidance method, and a program.

### [BACKGROUND ART]

Currently, the authentication system using an IC card is utilized in various fields, and is employed for the system such as supervision over entry into and exit from work areas. As the authentication system using the IC card, there also exists the system for previously storing authentication information etc. in the IC card, and performing the authentication simply by holding up the IC card over a card reader; however, in recent years, the system has been proposed in which the IC card itself is provided with an authentication function in order to prevent unjust use of the IC card due to a loss and a robbery of the IC card (for example, Patent literature 1).

The technology of the Patent literature 1, which is provided with a sensor for inputting fingerprint information into an IC card main body, performs the collatio0n with information within the IC card main body, and permits the use of the IC card on the basis of a collation result. Making a such a configuration makes it possible to prevent unjust use of the IC card due to a loss and a robbery of the IC card.

By the way, in recent years, not only the fingerprint authentication as described above but also face authentication of a user has been proposed.

### [CITATION LIST]

### [PATENT LITERATURE]

PTL 1: JP-P1992-24889A, PTL2: EP1589491, PTL3: US2004/0062423, PTL4: WO2010/086993 & EP2392259

### [SUMMARRY OF INVENTION]

### [TECHNICAL PROBLEM]

However, there exists the problem that an image from which a feature quantity can be extracted is hardly obtained in a case of extracting the feature quantity from the image of a face acquired by an imaging means mounted on the IC card, differently from the case of the fingerprint etc. The reason is that a scope to be imaged cannot easily decided because a scope of the face, being a collation target, is large (in particular, a size of the face is larger than that of the IC card main body), differently from the case of the image of the fingerprint and the like.

In addition, in consideration of the fact that the user carries the IC card at any time (for example, the user carries the IC card at any time by hanging it around the neck by a strap), it is required that the IC card is light-weighted and is thin. Thus, an imaging unit etc. for capturing the face image cannot be increased in size, and thus, it should be avoided to install a zoom for, also when the scope to be imaged differs, adjusting it, a lens driving mechanism for focus adjustment, and the like.

Thereupon, the present invention has been accomplished in consideration of the above-mentioned problems, and an object of the present invention is to provide an authentication card for leading a to-be-authenticated person, an authentication system, a guidance method, and a program so that the image from which at least a feature quantity of the face of the to-be-authenticated person necessary for collation of authentication can be extracted can be captured.

### [SOLUTION TO PROBLEM]

The present invention is an authentication card according to independent claim 1, an authentication system according to claim 8, an authentication system according to claim 10, a guidance method according to independent claim 11 and a computer program according to independent claim 12.

### [ADVANTAGEOUS EFFECT OF INVENTION]

The present invention makes it possible to lead the to-be-authenticated person in such a manner that the image from which at least the feature quantity of the face of the to-be-authenticated person necessary for the collation of authentication can be extracted can be captured.

### [BRIEF DESCRIPTION OF DRAWINGS]

[Fig. 1] Fig. 1 is a configuration view of the authentication system employing the IC card in accordance with the present invention.
[Fig. 2] Fig. 2 is an appearance view of an IC card 1.
[Fig. 3] Fig. 3 is a block diagram of the IC card 1.
[Fig. 4] Fig. 4 is a view for explaining a first exemplary embodiment.
[Fig. 5] Fig. 5 is an operational flowchart from collation to release of a gate in the first exemplary embodiment.
[Fig. 6] Fig. 6 is an operational flowchart from the collation to the release of the gate in the first exemplary embodiment.
[Fig. 7] Fig. 7 is a view for explaining another aspect of the first exemplary embodiment.
[Fig. 8] Fig. 8 is a view for explaining another aspect of the first exemplary embodiment.
[Fig. 9] Fig. 9 is a configuration view of the authentication system of a second exemplary embodiment.
[Fig. 10] Fig. 10 is a configuration view of the authentication system of a third exemplary embodiment.
[Fig. 11] Fig. 11 is a block diagram of the IC card 1 of a fourth exemplary embodiment.
[Fig. 12] Fig. 12 is a configuration view of the authentication system of the fourth exemplary embodiment.

### [DESCRIPTION OF EMBODIMENTS]

Exemplary embodiments of the present invention will be explained by employing the accompanied drawings.

### <First exemplary embodiment>

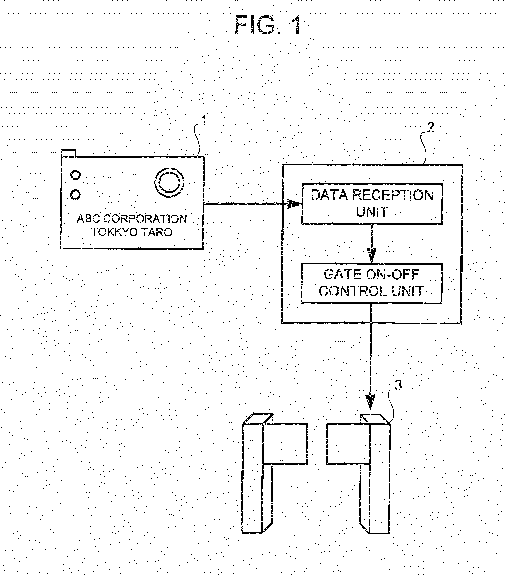

Fig. 1 is a configuration view of the authentication system employing the IC card in accordance with the present invention. This authentication system is a system for authenticating a specific system, and in the following, the system for permitting entry into off-limits dependent on the propriety of authentication is exemplified as a specific system for explanation.

In Fig. 1, 1 is an IC card, 2 is a card reader, and 3 is an on-off gate.

The IC card 1, which has a collation function within the card main body itself, transmits an authentication permission signal to the card reader 2 when the authentication succeeds as a result of collation of the user. Additionally, the details of a configuration and an operation of the IC card 1 will be later described.

The card reader 2 includes a date reception unit 21 and a gate on-ofF control unit 22. The date reception unit 21, upon receipt of the authentication permission signal from the IC card 1, transmits it to the gate on-off control unit 22. The gate on-off control unit 22, upon receipt of the authentication permission signal, transmits a gate release permission signal to the on-off gate 3.

The on-off gate 3, which is for opening/closing a gate mounted in the off-limits etc. dependent on the propriety of authentication, releases the gate when receiving the gate release permission signal.

Next, the IC card 1 will be explained in details.

The IC card 1 is an IC card provided with a collation function of performing the collation by the face of the user.

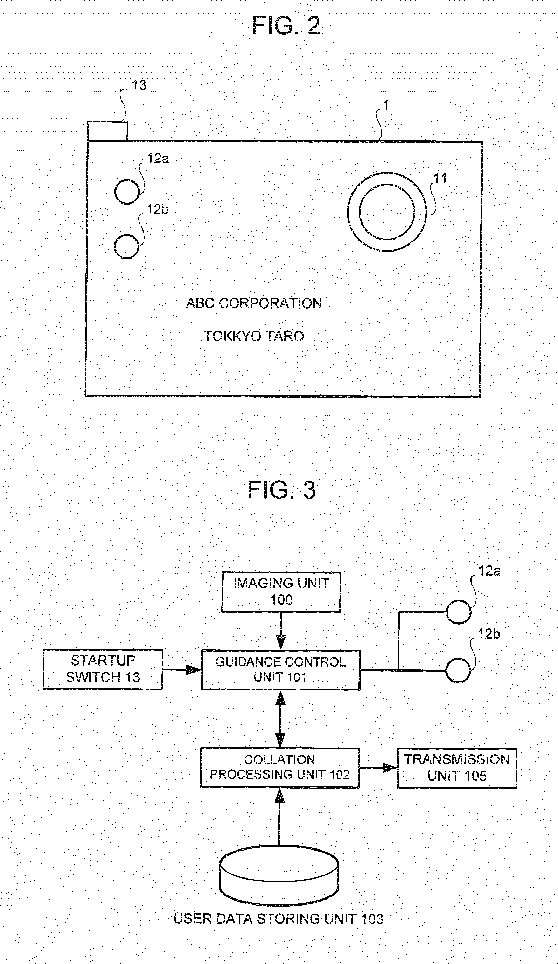

Fig. 2 is an appearance view of the IC card 1.

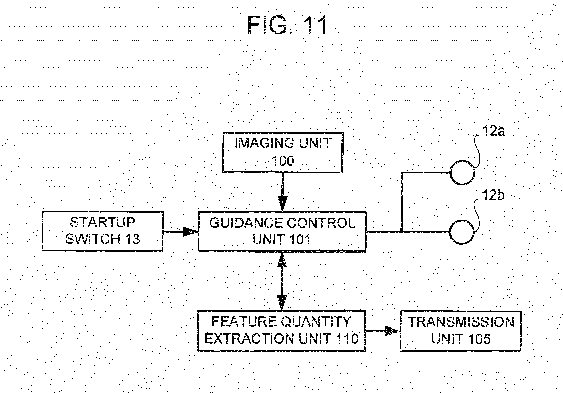

In Fig. 2, 11 is an imaging unit (lens) for imaging the face of the user, each of 12a and 12b is a guidance lamp for leading the to-be-authenticated person in such a manner that the image from which at least the feature quantity of the face of the to-be-authenticated person necessary for the collation of the authentication can be extracted can be captured, and 13 is a startup switch for starting up a collation process. Additionally, the guidance lamps 12a and 12b could be light emitters such as LED and an electric bulb.

Continuously, a configuration of the IC card 1 will be explained. Fig. 3 is a block diagram of the IC card 1.

As shown in Fig. 3, the IC card 1 includes the startup switch 13, the guidance lamps 12a and 12b, an imaging unit 100, a guidance control unit 101, an collation processing unit 102, a user data storing unit 103, and a transmission unit 105.

The imaging unit 100, which is an imaging unit for capturing the image of the face of the to-be-authenticated person, is configured of an image sensor such as CCD and CMOS, a control system, a lens optical system for focusing the image of the face in the image sensor, and the like. Additionally, in consideration of the fact that the user carries the IC card 1 at any time (for example, the user carries the IC card 1 at any time by hanging it around the neck with a strap), it is required that the IC card 1 is light-weighted and is thin. Thus, a fixed-focus lens having no lens driving function for zoom and focus adjustment is preferably employed as the imaging unit 100.

The guidance control unit 101 is a control unit for controlling the guidance for imaging the face for collation by switching on the startup switch 13. As described above, preferably, the imaging unit 100 has no lens driving function. Thus, with the case of the fixed-focus lens, it is necessary that the to-be-authenticated person moves the IC card 1 or the to-be-authenticated person itself moves at a position in which the image having a degree to which the face of the to-be-authenticated person can be collated (the image having a degree to which at least the feature quantity can be extracted) can be acquired because the pint adjustment and the zoom (expansion/reduction) cannot be optically performed. Thereupon, the guidance control unit 101 performs the guidance such that the to-be-authenticated person is led at a position in which the image having a degree to which the feature quantity of the face of the to-be-authenticated person necessary for the collation can be obtained can acquired by the imaging unit 100. And, when the image obtained by the imaging unit 100 is an image having a degree to which the collation of the face of the to-be-authenticated person can be performed, the guidance control unit 101 outputs data of the above face image to the collation processing unit 102.

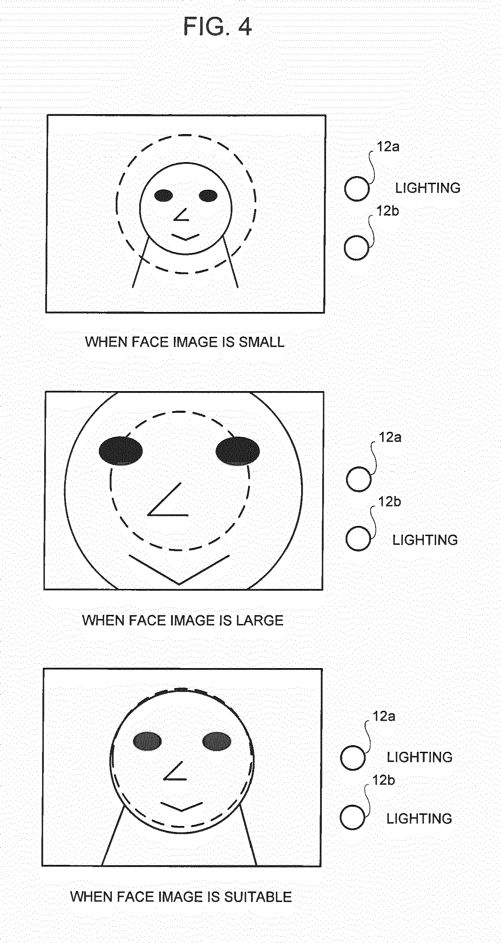

Specifically, when it is assumed that the size of the face image of the to-be-authenticated person captured by the imaging unit 100, which has a degree to which the feature quantity of the face of the to-be-authenticated person necessary for the collation can be obtained, is a size of a circle formed by a broken line in Fig. 4, the guidance control unit 101 lights the guidance lamp 12a so as to notify the effect that the IC card 1 should be approached to the to-be-authenticated person when the size of the face image to be obtained from the imaging unit 100 is smaller than that of the circle formed by a broken line. Further, the guidance control unit 101 lights the guidance lamp 12b so as to notify the effect that the IC card 1 should be kept away from the to-be-authenticated person when the size of the face image to be obtained from the imaging unit 100 is larger than that of the circle formed by a broken line in Fig. 4. On the other hand, when the size of the face image to be obtained from the imaging unit 100 is almost equal to that of the circle formed by a broken line in Fig. 4, the guidance control unit 101 lights both of the guidance lamps 12a and 12b, thereby to notify that the above position is a position suitable for the collation. And, the guidance control unit 101 outputs the image data of the face imaged at the above position to the collation processing unit 102. Additionally, in the identification example described above, it is enough for the guidance control unit 101 to judge the above size based on a contour etc. of the face without requesting the process such that the feature quantity of the face image is extracted; however, the guidance control unit 101 may judge the above size by making a determination as to whether or not the feature quantity can be extracted.

Further, it is not limited only to the size of the face image to be captured to notify the effect that the imaging environment is not suitable, and the guidance control unit 101 may notify the effect that the imaging environment is not suitable for capturing the face image by flashing the guidance lamps 12a and 12b also when the captured image is not suitable for the collation process (when the feature quantity of the face image cannot be obtained), for example, when the captured image is extremely dark and when the captured image is extremely light, judging from luminance information of an entirety of the captured image (for example, by flashing the guidance lamp 12a when the part of the face of the captured image is extremely dark, and by flashing the guidance lamp 12b when it is extremely light). In this case, the to-be-authenticated person results in moving to a different position according to the guidance of the guidance lamps 12a and 12b, and performing the collation process again.

The collation processing unit 102 receives the face image data from the guidance control unit 101, and extracts the feature quantity from the face image data. And, the collation processing unit 102 collates the extracted feature quantity of the to-be-authenticated person with the feature quantity of the user stored in the user data storing unit 103. The collation processing unit 102 outputs an authentication permission signal indicating an authentication permission to the transmission unit 105 when the feature quantities coincide with each other as a result of the collation and it can be authenticated that the to-be-authenticated person is a regular user. On the other hand, the collation processing unit 102 notifies the effect that it cannot be authenticated that the to-be-authenticated person is a regular user by flashing the guidance lamps 12a and 12b via the guidance control unit 101, and the like when the feature quantities do not coincide with each other and it cannot be authenticated that the to-be-authenticated person is a regular user.

Additionally, the feature quantity of the user stored in the user data storing unit 103 is not limited to the feature quantity of one user (for example, a regular user of the IC card 1). For example, the user data storing unit 103 may be caused to previously store the feature quantity of the face of a guest in a case in which the authentication service is temporarily required due to the guest's coming, and the like. That is, the relation could be not only a one-to-one relation, namely a relation of the feature quantity of one person to one IC card 1, but also a one-to-many relation.

The transmission unit 105, upon receipt of the permission signal from the collation processing unit 102, outputs the authentication permission signal to the data reception unit 21 of the card reader 2.

Next, an operation of the first exemplary embodiment will be explained.,

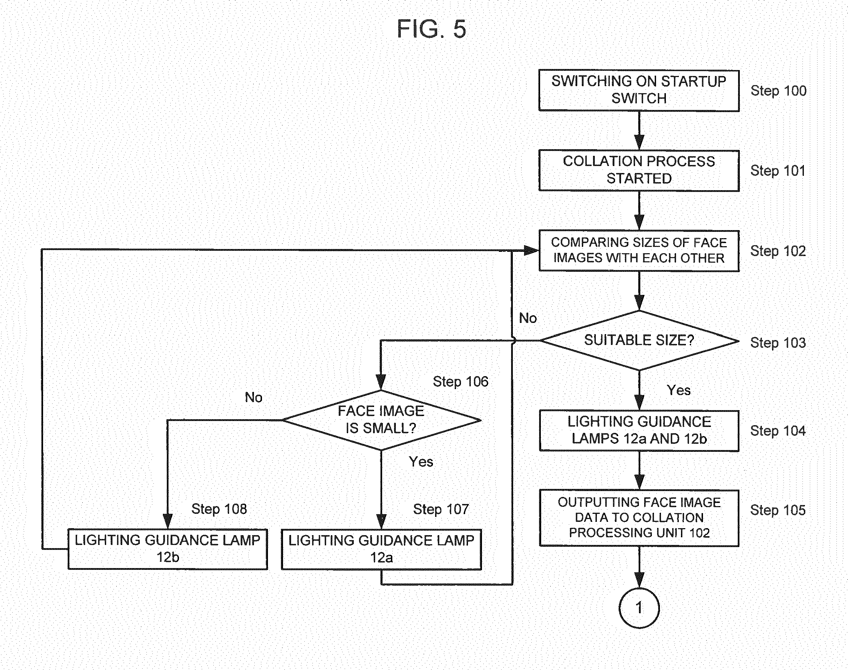

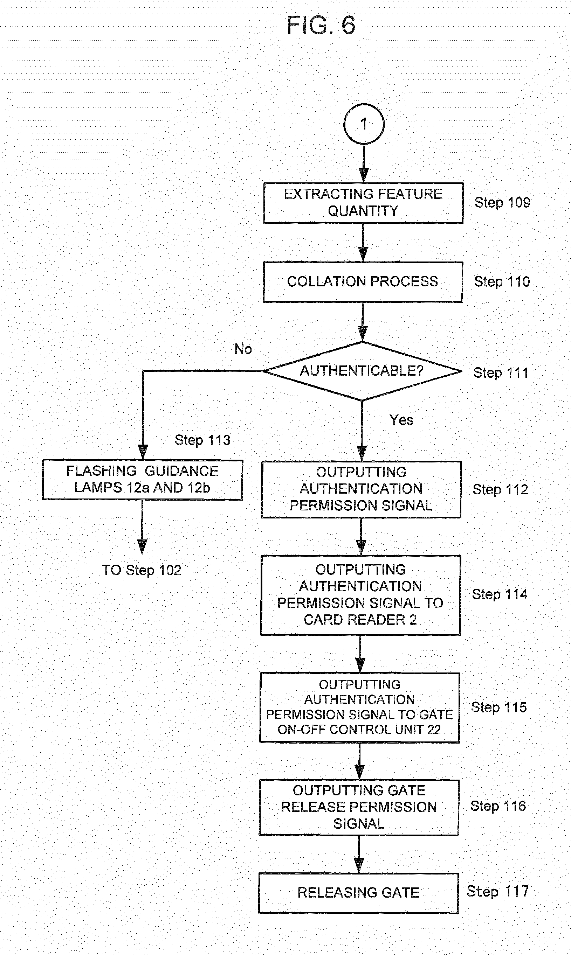

Each of Fig. 5 and Fig. 6 is an operational flowchart from the collation to the gate release in the first exemplary embodiment.

At first, a holder of the IC card 1 pushes down the startup switch 13 so as to obtain the authentication permission (Step 100).

When the startup switch 13 is pushed down, the collation process is started, and the guidance control unit 101 flashes the guidance lamps 12a and 12b at a slow flashing interval, and urges the to-be-authenticated person for the photography (Step 101).

And, when the to-be-authenticated person turns its face to the lens 11 of the IC card 1 and the imaging is started, the guidance control unit 101 compares the size of the face image obtained from the imaging unit 100 with a predetermined size (Step 102).

When the size of the face image to be obtained from the imaging unit 100 is almost equal to a predetermined size as a result of the comparison (Step 103), the guidance control unit 101 lights both of the guidance lamps 12a and 12b (Step 104). And, the guidance control unit 101 outputs the image data of the face imaged at the above position to the collation processing unit 102 (Step 105).

On the other hand, when the size of the face image to be obtained from the imaging unit 100 is smaller than a predetermined size (Step 106) as a result of the comparison (Step 103), the guidance control unit 101 lights the guidance lamps 12a (Step 107) so as to notify the effect that the IC card 1 should be approached to the to-be-authenticated person. And, the operation returns to the step 102.

On the other hand, when the size of the face image to be obtained from the imaging unit 100 is larger than a predetermined size (Step 106) as a result of the comparison, the guidance control unit 101 lights the guidance lamps 12b (Step 108) so as to notify the effect that the IC card 1 should be kept away from the to-be-authenticated person. And, the operation returns to the step 102.

The collation processing unit 102 receives the face image data from the guidance control unit 101, and extracts the feature quantity from the face image data (Step 109). And, the collation processing unit 102 collates the extracted feature quantity of the to-be-authenticated person with the feature quantity of the user stored in the user data storing unit 103 (Step 110).

The collation processing unit 102 outputs an authentication permission signal indicating an authentication permission to the transmission unit 105 (Step 112) when the feature quantities coincide with each other as a result of the collation (Step 111) and it can be authenticated that the to-be-authenticated person is a regular user. On the other hand, the collation processing unit 102 flashes the guidance lamps 12a and 12b (Step 113) when the feature quantities do not coincide with each other and it cannot be authenticated that the to-be-authenticated person is a regular user, and the operation returns to the Step 102.

The transmission unit 105, upon receipt of the authentication permission signal from the collation processing unit 102, outputs the authentication permission signal to the data reception unit 21 of the card reader 2 (Step 114).

The data reception unit 21 of the card reader 2 having received the authentication permission signal outputs the authentication permission signal to the gate on-off control unit 22 (Step 115).

The gate on-off control unit 22 having received the authentication permission signal transmits a gate release signal to the on-off gate 3 (Step 116).

The on-off gate 3 having received the gate release signal releases the gate (Step 117).

As mentioned above, the first exemplary embodiment, which is provided with the guidance control unit for leading the card and the to-be-authenticated person at a position in which the image necessary for the collation can be captured in the card having the collation function, makes it possible to capture the image necessary for the image collation without inflicting a burden on the to-be-authenticated person.

Further, the imaging unit does not need a function of optically performing the focus adjustment and the zoom (expansion/reduction) because the first exemplary embodiment performs the guidance for leading the card and the to-be-authenticated person at a position in which the image necessary for the collation can be captured, thereby making it possible to make the thickness of the card whereby thin, and to make the weight thereof light.

Additionally, the guidance was performed by lighting and flashing the guide lamps in the above-described first exemplary embodiment; however the guidance is not limited hereto. For example, the guidance lamps having a different luminescent color may be prepared to perform the guidance with the differentiated color. Further, the number of the guidance lamps is not limited, and the number may be increased/decreased.

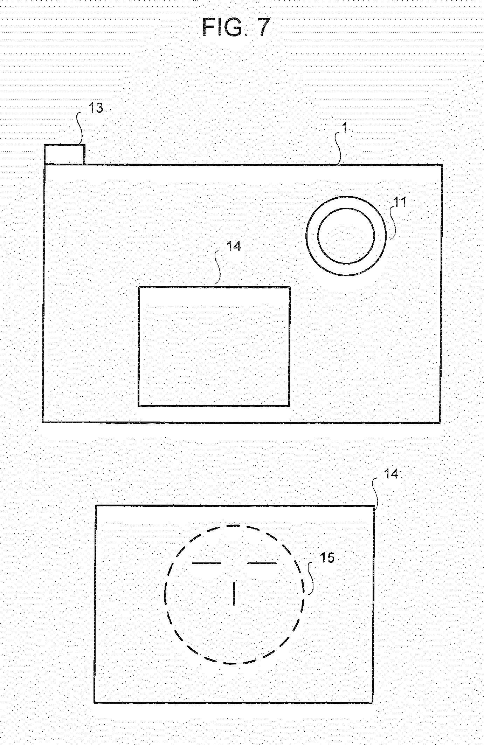

In addition, the guidance means is not limited to the light emitter, and a voice, a display, and the like may be used as the guidance means. For example, as shown in Fig. 7, a configuration may be made so that a display unit 14 is mounted in the IC card 1, a template 15 for deciding a face position of the to-be-authenticated person in which the image having a degree to which the collation can be performed (the image having a degree to which at least feature quantity can be extracted) can be captured is displayed on the display unit 14 at the time of the imaging, and the image of the face of the to-be-authenticated person that is captured by the imaging unit 100 is superposedly displayed on the template. Making such a configuration enables the to-be-authenticated person to move the IC card 1 so as to match its own face to the template 15 displayed on the display unit 14, whereby the image necessary the collation can be easily obtained. Additionally, the display unit 14 may be adapted to display a user name etc. of the IC card 1 at the time other than the time of the collation.

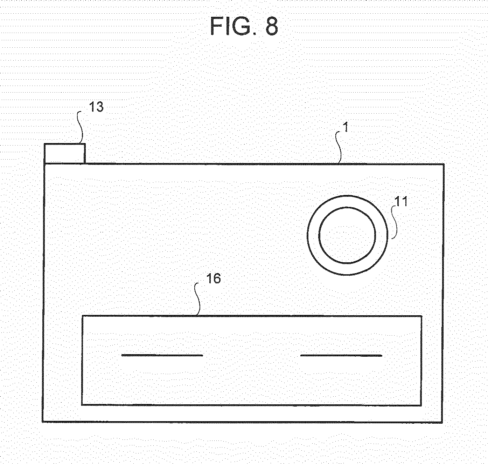

In addition, as shown in Fig. 8, a reflector member 16 like a mirror may be mounted in the IC card 1 to describe something like the template (for example, positions of eyes) in this reflector member 16. With such a configuration, an effect similar to the effect of mounting the display unit can be obtained. Additionally, the reflector member 16 is preferably mounted in the back side of the IC card 1 (for example, the surface facing the user side in a case of carrying the IC card 1 around the neck with the strap) together with the lens of the imaging unit 100.

In addition, it is also thinkable to illegally use the IC card 1 when a lapse of the time from the authentication to the transmission to the card reader 2 is long or the like even though the collation of the face image is suitable and the authentication has been obtained in the IC card 1. For example, the case of intimidating the regular user of the IC card 1 into the collation by use of the face image of the regular user in a location away from the card reader 2, and illegally entering into facilities etc. within the gate, and the like are thinkable. In consideration of such a case, the collation processing unit 102 or the transmission unit 105 may be adapted to stop the transmission of the authentication permission signal when a predetermined time (for example, 30 seconds) elapses.

### <Second exemplary embodiment>

In the second exemplary embodiment, an example of recording a log of the authentication will be explained. Additionally, a point in which the second exemplary embodiment differs from the above-described exemplary embodiment is mainly explained.

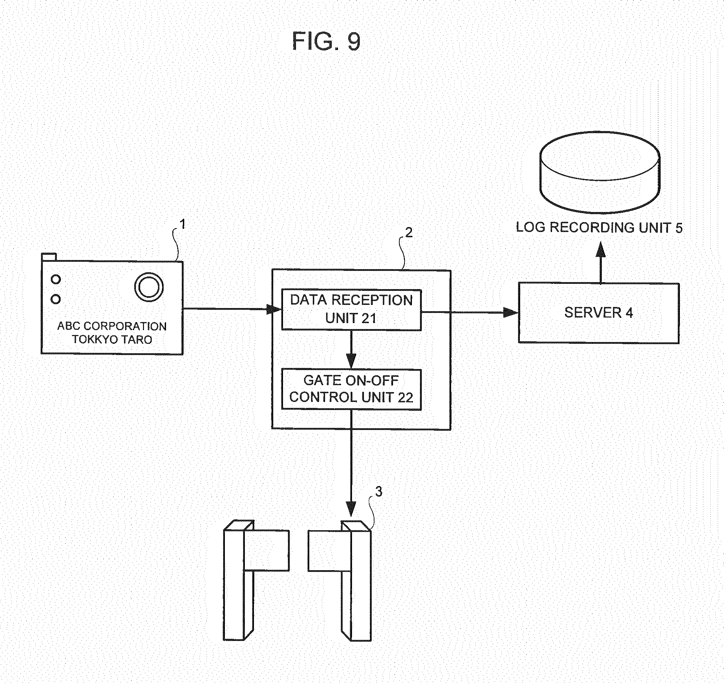

Fig. 9 is a configuration view of the authentication system of the second exemplary embodiment.

A point in which the second exemplary embodiment differs from the first exemplary embodiment is that a server 4 for sampling the log and a log recording unit 5 in which the log is recorded are mounted.

Further, in the second exemplary embodiment, the IC card 1 transmits to the card reader 2 an identification number assigned to the IC card 1 and the face image data of the to-be-authenticated person that has been utilized for the collation in order to obtain the authentication permission, together with the authentication permission signal.

The data reception unit 21 of the card reader 2, upon receipt of the authentication permission signal, the identification number of the IC card 1, and the face image data of the to-be-authenticated person, outputs the authentication permission signal to the gate on-off control unit 22, and outputs the identification number of the IC card 1 and the face image data of the to-be-authenticated person to the server 4.

The server 4 receives the identification number of the IC card 1 and the face image data of the to-be-authenticated person coming from the card reader 2, and records the identification number of the IC card 1 and the face image data of the to-be-authenticated person received from the card reader 2 together with reception times thereof as the log in the log recording unit 5.

The log at the time of the collation is recoded in the second exemplary embodiment, whereby also when the entry record etc. needs to be confirmed later, it can be collated from the record of the log. In particular, the person who entered can be determined with its face because the data of the face image is recorded together with the identification number of the IC card 1.

Additionally, the things to be recorded in the log are not limited to the identification number of the IC card 1, the face image data of the to-be-authenticated person, and the reception time.

### <Third exemplary embodiment>

The third exemplary embodiment will be explained. Additionally, a point in which the third exemplary embodiment differs from the above-described exemplary embodiments is mainly explained.

It is also thinkable to illegally use the IC card 1 when a lapse of the time from the authentication to the transmission to the card reader 2 is long or the like even though the collation of the face image is suitable and the authentication has been obtained in the IC card 1. For example, the case of intimidating the regular user of the IC card 1 into the collation by use of the face image of the regular user in a location away from the card reader 2, and illegally entering into facilities etc. within the gate, and the like are thinkable.

In consideration of the above-mentioned circumstances, an example of also incorporating the collation time as a target of the authentication in addition to the collation of the face image will be explained in the third exemplary embodiment.

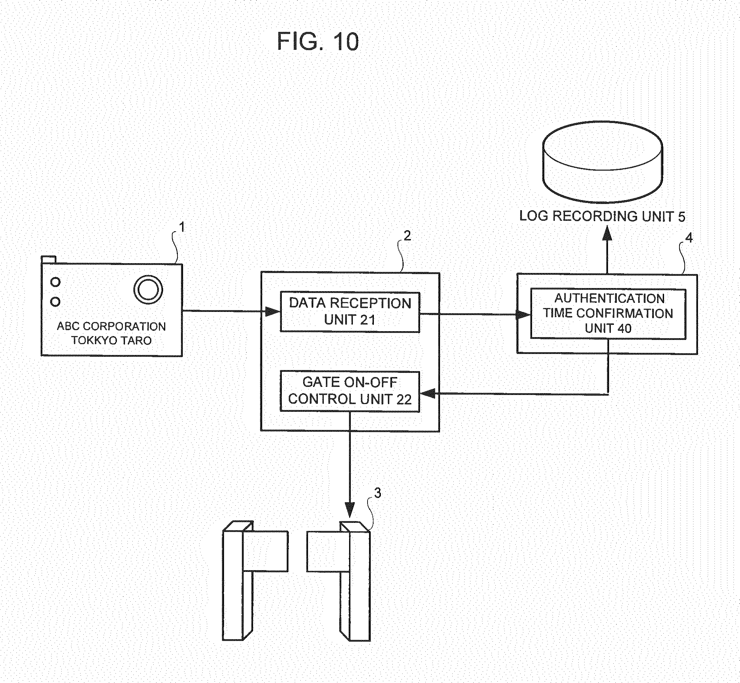

Fig. 10 is a configuration view of the authentication system of the third exemplary embodiment.

In the third exemplary embodiment, the collation processing unit 102 of the IC card 1 measures the time, and transmits the authentication time and the authentication permission signal to the transmission unit 105 when the authentication has been obtained. The transmission unit 105 transmits the authentication time and the authentication permission signal to the card reader 2.

The data reception unit 21 of the card reader 2, upon receipt of the authentication permission signal and the collation time, transmits the authentication permission signal and the authentication time to the server 4.

An authentication time confirmation unit 40 of the server 4 compares the authentication time with the current time, and transmits the authentication permission signal to the gate on-off control unit 22 of the card reader 2 when a difference thereof is a time within a predetermined range (for example, 30 seconds).

The gate on-off control unit 22 of the card reader 2 having received the authentication permission signal transits the gate release signal to the on-off gate 3.

The on-off gate 3 having received the gate release signal releases the gate.

The third exemplary embodiment compares the authentication time with the current time in addition to the authentication of the face image, whereby such an illegal action of illegally performing the collation with the IC card and trying to enter into facilities etc. within the gate can be prevented.

### <Fourth exemplary embodiment>

The fourth exemplary embodiment will be explained. Additionally, a point in which the fourth exemplary embodiment differs from the above-described exemplary embodiments is mainly explained.

An example of performing the collation process of the face image with the IC card 1 was explained in the above-described first exemplary embodiment to the third exemplary embodiment.

An example of extracting only the feature quantity of the face image in the IC card 1 and performing the collation/authentication in the server 4 side will be explained in the fourth exemplary embodiment.

Fig. 11 is a block diagram of the IC card 1 of the fourth exemplary embodiment.

As shown in Fig. 11, the IC card 1 is provided with a feature quantity extraction unit 110 for extracting the feature quantity from the face image data instead of the user data storing unit 103 and the collation processing unit 102. The feature quantity extraction unit 110 transmits the feature quantity extracted from the face image data to the transmission unit 105. The transmission unit 105, upon receipt of the feature quantity from the feature quantity extraction unit 110, transmits the feature quantity to the data reception unit 21 of the card reader 2.

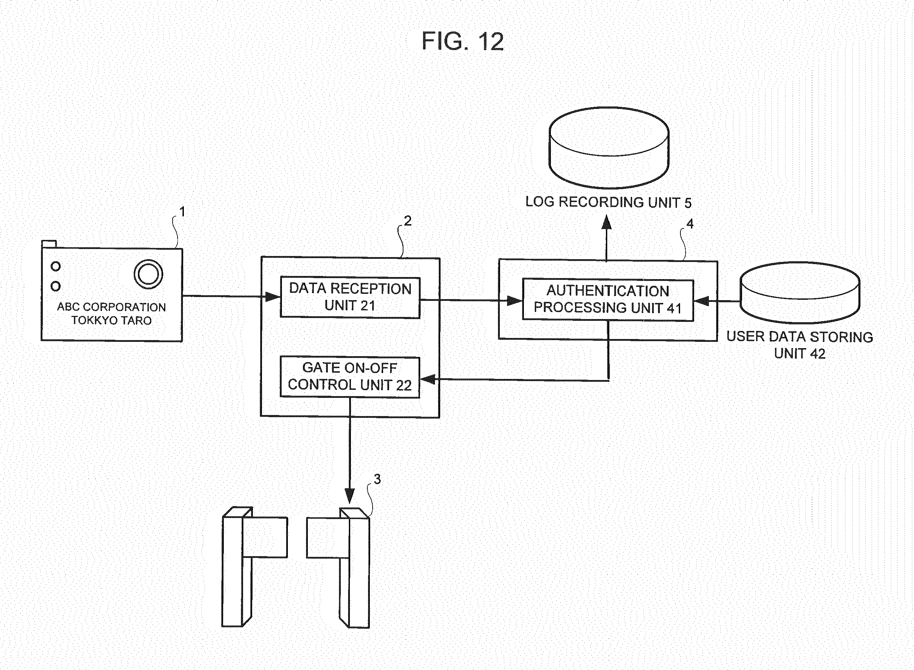

Fig. 12 is a configuration view of the authentication system of the fourth exemplary embodiment.

The data reception unit 21 of the card reader 2, upon receipt of the feature quantity, transmits this feature quantity to the server 4.

The server 4 includes an authentication processing unit 41 and a user data storing unit 42.

The authentication processing unit 41 receives the feature quantity from the data reception unit 21 of the card reader 2, and collates this feature quantity with the feature quantity stored in the user data storing unit 42. Additionally, a configuration can be also made so that the identification information of the IC card 1 and the feature quantity are previously stored correspondingly to each other in the user data storing unit 42, the identification information of the IC card 1 is acquired from the IC card 1 together with the feature quantity of the to-be-authenticated person. In this case, it is enough for the authentication processing unit 41 to acquire the feature quantity corresponding to the received identification information from the user data storing unit 42 and to collate this feature quantity with the received feature quantity of the to-be-authenticated person, whereby a processing burden can be alleviated.

When the feature quantities coincide with each other as a result of the collation and it can be authenticated that the to-be-authenticated person is a regular user, the authentication processing unit 41 transmits the authentication permission signal indicating the authentication permission to the gate on-off control unit 22 of the card reader 2.

The gate on-off control unit 22 of the card reader 2 having received the authentication permission signal transmits the gate release signal to the on-off gate 3.

The on-off gate 3 having received the gate release signal releases the gate.

A configuration was made so that the authentication process was performed by the server in the fourth exemplary embodiment, whereby the processing burden in the IC card 1 is alleviated.

Additionally, an example of the IC card with portability employed at the moment that the user disclosed its identity was explained in the above-described first to fourth exemplary embodiments; however, the authentication device is not limited to the card.

Further, as apparent from the above-mentioned explanation, each unit can be configured with hardware; however, it can be also realized with a computer program. In this case, functions and operations similar to the functions and the operations of the above-described each exemplary embodiment are realized by a processor that operates under a program stored in a program memory. Additionally, only one part of the functions of the above-described exemplary embodiments can be realized with the computer program.

### [REFERENCE SIGNS LIST]

- 1: IC card
- 2: card reader
- 3: on-off gate
- 4: server
- 5: log recording unit
- 11: imaging unit (lens)
- 12a: guidance lamp
- 12b: guidance lamp
- 13: startup switch
- 14: display unit
- 15: template
- 16: reflector member
- 21: data reception unit
- 22: gate on-off control unit
- 40: authentication time confirmation unit
- 41: authentication processing unit
- 42: user data storing unit
- 100: imaging unit
- 101: guidance control unit
- 102: collation processing unit
- 103: user data storing unit
- 105: transmission unit
- 110: feature quantity extraction unit

## Claims

1. An authentication card, comprising:
an imaging means (100) adapted to capture a face image of a to-be-authenticated person; and
a guidance means adapted to perform guidance of leading said to-be-authenticated person in such a manner that an image from which at least a feature quantity of the face of the to-be-authenticated person necessary for collation of authentication can be extracted can be captured by said imaging means;
a guidance control means (101) adapted to determine, from luminance information of the captured face image,
whether a feature quantity of the face of the to-be-authenticated person can be extracted from the captured face image, control, if the face of the to-be-authenticated person cannot be extracted from the captured face image, the guidance means so as to perform different guidance between when the luminance of the captured face image is greater than an upper limit and when the luminance of the captured face image is lower than a lower limit,
wherein the imaging means comprises a fixed-focus lens having no lens driving function for zoom and focus adjustment,
said guidance means includes at least one light emitter (12a, 12b), and
said guidance means is adapted to perform the guidance by lighting of the at least one light emitter, flashing of the at least one light emitter, luminescent color of the at least one light emitter, or a combination thereof,
said guidance control means (101) is adapted to
determine, whether luminance and size of the captured face image have a degree to which at least the feature quantity of the face of the to-be-authenticated person necessary for collation of authentication,
control, if the luminance of the captured face image does not have the degree to which at least the feature quantity of the face of the to-be-authenticated person necessary for collation of authentication, the guidance means so as to perform different guidance between when the luminance of the captured face image is greater than the upper limit and when the luminance of the captured face image is lower than the lower limit, and
control, if the size of the captured face image does not have the degree to which at least the feature quantity of the face of the to-be-authenticated person necessary for collation of authentication, the guidance means so as to perform different guidance between when the size of the captured face image is greater than an upper limit and when the size of the captured face image is lower than a lower limit.

2. The authentication card according to claim 1, wherein said guidance means is adapted to guide said to-be-authenticated person so as to lead the authentication card at a position in which the image from which at least the feature quantity of the face of the to-be-authenticated person necessary for the collation of the authentication can be extracted can be captured by said imaging means (100).

3. The authentication card according to claim 1:
wherein said guidance means includes a display means adapted to display a template for deciding a face position; and
wherein said guidance means is adapted to perform the guidance by displaying said template and the face of the to-be-authenticated person to be imaged by said imaging means (100) on said display means.

4. The authentication card according to any one of claim 1 to claim 3, comprising:
a user data storing means (103) having the feature quantity of the face of a user of a specific system stored therein; and
a collation means (102) adapted to extract the feature quantity from the captured face image, to collate the extracted feature quantity with the feature quantity of said user data storing means, and to determine the authentication.

5. The authentication card according to claim 4, comprising a face image data transmission means (105) adapted to transmit face image data of the authenticated to-be-authenticated person to a reader adapted to read date of the authentication card.

6. The authentication card according to claim 4 or claim 5, wherein said collation means (102) is adapted to not transmit an authentication permission signal to the reader that reads date of the authentication card when a predetermined time elapses after authenticating said to-be-authenticated person.

7. The authentication card according to any one of claim 1 to claim 3, comprising a feature quantity extraction means (110) adapted to extract the feature quantity from the captured face image, and to transmit the extracted feature quantity to the reader that reads date of the authentication card.

8. An authentication system for authenticating utilization of a specific system, comprising:
A) an authentication card according to claim 1, further comprising:
a user data storing means (103) having the feature quantity of the face of a user of said specific system stored therein;
a collation means (102) adapted to extract the feature quantity from the captured face image, to collate the extracted feature quantity with the feature quantity of said user data storing means, and to determine the authentication; and
a face image data transmission means (105) adapted to transmit face image data of the authenticated to-be-authenticated person; and
B) a recording means (5) adapted to record the face image data of said to-be-authenticated person.

9. An authentication system according to claim 8,
wherein said collation means (102) is adapted to extract the feature quantity from the captured face image, to collate the extracted feature quantity with the feature quantity of said user data storing means (103), and to transmit a collation time when authentication can be performed; and
wherein said authentication system comprises a means (40) adapted to receive said collation time, to compare said collation time with the current time, and to permit the authentication of said to-be-authenticated person when a difference thereof is within a predetermined range.

10. An authentication system for authenticating utilization of a specific system, comprising:
A) an authentication card according to claim 1, further comprising:
a feature quantity extraction means (110) adapted to extract the feature quantity from the captured face image, and to transmit the extracted feature quantity;
B) a user data storing means (42) having the feature quantity of the face of a user of said specific system stored therein; and
C) a collation means (41) adapted to receive the feature quantity of said to-be-authenticated person from said authentication card, to collate the received feature quantity with the feature quantity of said user data storing means, and to determine authentication.

11. A guidance method of an authentication card having an imaging means that images a face of a to-be-authenticated person and comprises a fixed-focus lens having no lens driving function for zoom and focus adjustment, and guidance means including at least one light emitter (12a, 12b), the method comprising:
capturing a face image of a to-be-authenticated person;
determining, from luminance information of the captured face image, whether a feature quantity of the face of the to-be-authenticated person can be extracted from the captured face image; and
controlling the guidance means to perform, if the face of the to-be-authenticated person cannot be extracted from the captured face image, different guidance between when the luminance of the captured face image is greater than an upper limit and when the luminance of the captured face image is lower than a lower limit,
wherein said guidance is performed by lighting of the at least one light emitter, flashing of the at least one light emitter, luminescent color of the at least one light emitter of the at least one light emitter, or a combination thereof,
the method further comprising:
determining, whether luminance and size of the captured face image have a degree to which at least the feature quantity of the face of the to-be-authenticated person necessary for collation of authentication,
controlling, if the luminance of the captured face image does not have the degree to which at least the feature quantity of the face of the to-be-authenticated person necessary for collation of authentication, the guidance means so as to perform different guidance between when the luminance of the captured face image is greater than the upper limit and when the luminance of the captured face image is lower than the lower limit, and
controlling, if the size of the captured face image does not have the degree to which at least the feature quantity of the face of the to-be-authenticated person necessary for collation of authentication, the guidance means so as to perform different guidance between when the size of the captured face image is greater than an upper limit and when the size of the captured face image is lower than a lower limit.

12. A computer program comprising instructions which, when the program is executed by a computer of an authentication card, cause the computer to carry out the method according to claim 11.

## Patentansprüche

1. Authentifizierungskarte, umfassend:
eine Bildgebungseinrichtung (100), die dazu geeignet ist, ein Gesichtsbild einer zu authentifizierenden Person aufzunehmen; und
eine Führungseinrichtung, die dazu geeignet ist, eine Führung zum Leiten der zu authentifizierenden Person auf derartige Weise durchzuführen, dass ein Bild, aus welchem wenigstens eine zur Kollation einer Authentifizierung nötige Merkmalsmenge des Gesichts der zu authentifizierenden Person extrahiert werden kann, durch die Bildgebungseinrichtung aufgenommen werden kann;
eine Führungssteuereinrichtung (101), die dazu geeignet ist,
aus Luminanz-Information des aufgenommenen Gesichtsbilds zu bestimmen, ob eine Merkmalsmenge des Gesichts der zu authentifizierenden Person aus dem aufgenommenen Gesichtsbild extrahiert werden kann, und
wenn das Gesicht der zu authentifizierenden Person nicht aus dem aufgenommenen Gesichtsbild extrahiert werden kann, die Führungseinrichtung derart zu steuern, dass sie zwischen dann, wenn die Luminanz des aufgenommenen Gesichtsbild größer als eine obere Grenze ist, und dann, wenn die Luminanz des aufgenommenen Gesichtsbilds niedriger als eine untere Grenze ist, eine andere Führung durchführt,
wobei
die Bildgebungseinrichtung ein Fixfokus-Objektiv umfasst, das keine Objektivantriebsfunktion für Zoom und Brennweiteneinstellung hat,
die Führungseinrichtung wenigstens einen Lichtemitter (12a, 12b) enthält, und
die Führungseinrichtung dazu geeignet ist, die Führung durchzuführen durch Erleuchten lassen des wenigstens einen Lichtemitters, Blinken lassen des wenigstens einen Lichtemitters, eine lumineszierende Farbe des wenigstens einen Lichtemitters oder eine Kombination davon,
die Führungssteuereinrichtung (101) dazu geeignet ist,
zu bestimmen, ob Luminanz und Größe des aufgenommenen Gesichtsbilds ein Ausmaß bis zu wenigstens der zur Kollation einer Authentifizierung nötigen Merkmalsmenge des Gesichts der zu authentifizierenden Person haben,
wenn die Luminanz des aufgenommenen Gesichtsbilds nicht das Ausmaß bis zu wenigstens der zur Kollation einer Authentifizierung nötigen Merkmalsmenge des Gesichts der zu authentifizierenden Person hat, die Führungseinrichtung derart zu steuern, dass sie zwischen dann, wenn die Luminanz des aufgenommenen Gesichtsbilds größer als die obere Grenze ist, und dann, wenn die Luminanz des aufgenommenen Gesichtsbilds kleiner als die untere Grenze ist, eine andere Führung durchführt,
wenn die Größe des aufgenommenen Gesichtsbilds nicht das Ausmaß bis zu wenigstens der zur Kollation einer Authentifizierung nötigen Merkmalsmenge des Gesichts der zu authentifizierenden Person hat, die Führungseinrichtung derart zu steuern, dass sie zwischen dann, wenn die Größe des aufgenommenen Gesichtsbilds größer als eine obere Grenze ist, und dann, wenn die Größe des aufgenommenen Gesichtsbilds kleiner als eine untere Grenze ist, eine andere Führung durchführt.

2. Authentifizierungskarte nach Anspruch 1, wobei die Führungseinrichtung dazu geeignet ist, die zu authentifizierende Person derart zu führen, dass sie die Authentifizierungskarte an eine Position leitet, bei der das Bild, aus dem wenigstens die für die Kollation der Authentifizierung nötige Merkmalsmenge des Gesichts der zu authentifizierenden Person extrahiert werden kann, durch die Bildgebungseinrichtung (100) aufgenommen werden kann.

3. Authentifizierungskarte nach Anspruch 1:
wobei die Führungseinrichtung eine Anzeigeeinrichtung enthält, die dazu geeignet ist, eine Vorlage zum Entscheiden über eine Gesichtsposition anzuzeigen; und
wobei die Führungseinrichtung dazu geeignet ist, die Führung durch Anzeigen der Vorlage und des Gesichts der zu authentifizierenden Person, um durch die Bildgebungseinrichtung (100) abgebildet zu werden, auf der Anzeigeeinrichtung durchzuführen.

4. Authentifizierungskarte nach einem vom Anspruch 1 bis zum Anspruch 3, umfassend:
eine Anwenderdaten-Speichereinrichtung (103), die die Merkmalsmenge des Gesichts eines Anwenders eines spezifischen Systems darin gespeichert hat; und
eine Kollationseinrichtung (102), die dazu geeignet ist, die Merkmalsmenge aus dem aufgenommenen Gesichtsbild zu extrahieren, um die extrahierte Merkmalsmenge mit der Merkmalsmenge der Anwenderdaten-Speichereinrichtung zu kollationieren und um die Authentifizierung zu bestimmen.

5. Authentifizierungskarte nach Anspruch 4, die eine Gesichtsbilddaten-Übertragungseinrichtung (105) umfasst, die dazu geeignet ist, Gesichtsbilddaten der authentifizierten zu authentifizierenden Person zu einem Leser zu übertragen, der dazu geeignet ist, einen Zeitpunkt der Authentifizierungskarte zu lesen.

6. Authentifizierungskarte nach Anspruch 4 oder Anspruch 5, wobei die Kollationseinrichtung (102) dazu geeignet ist, Authentifizierungserlaubnissignal nicht zu dem Leser zu übertragen, der einen Zeitpunkt der Authentifizierungskarte liest, wenn eine vorbestimmte Zeit nach einem Authentifizieren der zu authentifizierenden Person verstreicht.

7. Authentifizierungskarte nach einem vom Anspruch 1 bis zum Anspruch 3, die eine Merkmalsmengen-Extraktionseinrichtung (110) umfasst, die dazu geeignet ist, die Merkmalsmenge aus dem aufgenommenen Gesichtsbild zu extrahieren und die extrahierte Merkmalsmenge zu dem Leser zu übertagen, der einen Zeitpunkt der Authentifizierungskarte liest.

8. Authentifizierungssystem zum Authentifizieren einer Nutzung eines spezifischen Systems, umfassend:
A) eine Authentifizierungskarte nach Anspruch 1, weiterhin umfassend:
eine Anwenderdaten-Speichereinrichtung (103), die die Merkmalsmenge des Gesichts eines Anwenders des spezifischen Systems darin gespeichert hat;
eine Kollationseinrichtung (102), die dazu geeignet ist, die Merkmalsmenge aus dem aufgenommenen Gesichtsbild zu extrahieren, um die extrahierte Merkmalsmenge mit der Merkmalsmenge der Anwenderdaten-Speichereinrichtung zu kollationieren und um die Authentifizierung zu bestimmen; und
eine Gesichtsbilddaten-Übertragungseinrichtung (105), die dazu geeignet ist, die Gesichtsbilddaten der authentifizierten zu authentifizierenden Person zu übertragen; und
B) eine Aufzeichnungseinrichtung (5), die dazu geeignet ist, die Gesichtsbilddaten der zu authentifizierenden Person aufzuzeichnen.

9. Authentifizierungssystem nach Anspruch 8,
wobei die Kollationseinrichtung (102) dazu geeignet ist, die Merkmalsmenge aus dem aufgenommenen Gesichtsbild zu extrahieren, um die extrahierte Merkmalsmenge mit der Merkmalsmenge der Anwenderdaten-Speichereinrichtung (103) zu kollationieren und um eine Kollationszeit zu übertragen, wenn eine Authentifizierung durchgeführt werden kann; und
wobei das Authentifizierungssystem eine Einrichtung (40) umfasst, die dazu geeignet ist, die Kollationszeit zu empfangen, um die Kollationszeit mit der momentanen Zeit zu vergleichen und um die Authentifizierung der zu authentifizierenden Person zu erlauben, wenn eine Differenz davon innerhalb eines vorbestimmten Bereichs ist.

10. Authentifizierungssystem zum Authentifizieren einer Nutzung eines spezifischen Systems, umfassend:
A) eine Authentifizierungskarte nach Anspruch 1, weiterhin umfassend:
eine Merkmalsmengen-Extraktionseinrichtung (110), die dazu geeignet ist, die Merkmalsmenge aus dem aufgenommenen Gesichtsbild zu extrahieren und die extrahierte Merkmalsmenge zu übertragen;
B) eine Anwenderdaten-Speichereinrichtung (42), die die Merkmalsmenge des Gesichts eines Anwenders des spezifischen Systems darin gespeichert hat; und
C) eine Kollationseinrichtung (41), die dazu geeignet ist, die Merkmalsmenge der zu authentifizierenden Person von der Authentifizierungskarte zu empfangen, um die empfangene Merkmalsmenge mit der Merkmalsmenge der Anwenderdaten-Speichereinrichtung zu kollationieren und um eine Authentifizierung zu bestimmen.

11. Führungsverfahren einer Authentifizierungskarte mit einer Bildgebungseinrichtung, die ein Gesicht einer zu authentifizierenden Person abbildet und ein Festfokus-Objektiv umfasst, das keine Objektivantriebsfunktion für Zoom und Brennweiteneinstellung hat, und einer Führungseinrichtung, die wenigstens einen Lichtemitter (12a, 12b) enthält, wobei das Verfahren folgendes umfasst:
Aufnehmen eines Gesichtsbilds einer zu authentifizierenden Person;
Bestimmen, aus Luminanz-Information des aufgenommenen Gesichtsbilds, ob eine Merkmalsmenge des Gesichts der zu authentifizierenden Person aus dem aufgenommenen Gesichtsbild extrahiert werden kann; und
Steuern der Führungseinrichtung, um, wenn das Gesicht derzu authentifizierenden Person nicht aus dem aufgenommenen Gesichtsbild extrahiert werden kann, zwischen dann, wenn die Luminanz des aufgenommenen Gesichtsbilds größer als eine obere Grenze ist, und dann, wenn die Luminanz des aufgenommenen Gesichtsbilds kleiner als eine untere Grenze ist, eine andere Führung durchzuführen,
wobei die Führung durch Erleuchten lassen des wenigstens einen Lichtemitters, Blinken lassen des wenigstens einen Lichtemitters, lumineszierende Farbe des wenigstens einen Lichtemitters oder eine Kombination davon durchgeführt wird,
wobei das Verfahren weiterhin folgendes umfasst:
Bestimmen, ob Luminanz und Größe des aufgenommenen Gesichtsbilds ein Ausmaß bis zu wenigstens der zur Kollation einer Authentifizierung nötigen Merkmalsmenge des Gesichts der zu authentifizierenden Person haben,
wenn die Luminanz des aufgenommenen Gesichtsbilds nicht das Ausmaß bis zu wenigstens der zur Kollation einer Authentifizierung nötigen Merkmalsmenge des Gesichts der zu authentifizierenden Person hat, Steuern der Führungseinrichtung so, dass sie zwischen dann, wenn die Luminanz des aufgenommenen Gesichtsbilds größer als die obere Grenze ist, und dann, wenn die Luminanz des aufgenommenen Gesichtsbilds kleiner als die untere Grenze ist, eine andere Führung durchführt,
wenn die Größe des aufgenommenen Gesichtsbilds nicht das Ausmaß bis zu wenigstens der zur Kollation einer Authentifizierung nötigen Merkmalsmenge des Gesichts der zu authentifizierenden Person hat, Steuern der Führungseinrichtung so, dass sie zwischen dann, wenn die Größe des aufgenommenen Gesichtsbilds größer als eine obere Grenze ist, und dann, wenn die Luminanz des aufgenommenen Gesichtsbilds kleiner als eine untere Grenze ist, eine andere Führung durchführt.

12. Computerprogramm, das Anweisungen umfasst, die dann, wenn das Programm durch einen Computer einer Authentifizierungskarte ausgeführt wird, veranlassen, dass der Computer das Verfahren nach Anspruch 11 ausführt.

## Revendications

1. Carte d'authentification comprenant :
un moyen d'imagerie (100) adapté pour capturer une image de visage d'une personne à authentifier ; et
un moyen de guidage adapté pour réaliser un guidage pour diriger ladite personne à authentifier de telle manière qu'une image, à partir de laquelle au moins une quantité de caractéristiques du visage de la personne à authentifier nécessaire pour la collation d'une authentification peut être extraite, puisse être capturée par ledit moyen d'imagerie ;
un moyen de commande de guidage (101) adapté pour déterminer, à partir d'informations de luminance de l'image de visage capturée, si une quantité de caractéristiques du visage de la personne à authentifier peut être extraite de l'image de visage capturée, commander, si le visage de la personne à authentifier ne peut pas être extrait à partir de l'image de visage capturée, le moyen de guidage de manière à réaliser un guidage différent entre un moment où la luminance de l'image de visage capturée est supérieure à une limite supérieure et un moment où la luminance de l'image de visage capturée est inférieure à une limite inférieure,
dans laquelle le moyen d'imagerie comprend une lentille à foyer fixe n'ayant aucune fonction d'entraînement de lentille pour un réglage de zoom et de mise au point,
ledit moyen de guidage inclut au moins un émetteur de lumière (12a, 12b), et
ledit moyen de guidage est adapté pour réaliser le guidage par un éclairage de l'au moins un émetteur de lumière, un clignotement de l'au moins un émetteur de lumière, une couleur luminescente de l'au moins un émetteur de lumière ou une combinaison de ceux-ci,
ledit moyen de commande de guidage (101) est adapté pour
déterminer si une luminance et une taille de l'image de visage capturée ont un degré auquel au moins la quantité de caractéristiques du visage de la personne à authentifier nécessaire pour la collation d'une authentification,
commander, si la luminance de l'image de visage capturée n'a pas le degré auquel au moins la quantité de caractéristiques du visage de la personne à authentifier nécessaire pour la collation d'une authentification, le moyen de guidage de manière à réaliser un guidage différent entre un moment où la luminance de l'image de visage capturée est supérieure à la limite supérieure et un moment où la luminance de l'image de visage capturée est inférieure à la limite inférieure, et
commander, si la taille de l'image de visage capturée n'a pas le degré auquel au moins la quantité de caractéristiques du visage de la personne à authentifier nécessaire pour la collation d'une authentification, le moyen de guidage de manière à réaliser un guidage différent entre un moment où la taille de l'image de visage capturée est supérieure à une limite supérieure et un moment où la taille de l'image de visage capturée est inférieure à une limite inférieure.

2. Carte d'authentification selon la revendication 1, dans laquelle ledit moyen de guidage est adapté pour guider ladite personne à authentifier de manière à diriger la carte d'authentification au niveau d'une position dans laquelle l'image, à partir de laquelle au moins la quantité de caractéristiques du visage de la personne à authentifier nécessaire pour la collation de l'authentification peut être extraite, puisse être capturée par ledit moyen d'imagerie (100).

3. Carte d'authentification selon la revendication 1 :
dans laquelle ledit moyen de guidage inclut un moyen d'affichage adapté pour afficher un gabarit pour décider une position de visage ; et
dans laquelle ledit moyen de guidage est adapté pour réaliser le guidage en affichant ledit gabarit et le visage de la personne à authentifier à représenter par image par ledit moyen d'imagerie (100) sur ledit moyen d'affichage.

4. Carte d'authentification selon l'une quelconque de la revendication 1 à la revendication 3, comprenant :
un moyen de stockage de données d'utilisateur (103) ayant la quantité de caractéristiques du visage d'un utilisateur d'un système spécifique stockée à l'intérieur; et
un moyen de collation (102) adapté pour extraire la quantité de caractéristiques à partir de l'image de visage capturée, pour collationner la quantité de caractéristiques extraite avec la quantité de caractéristiques dudit moyen de stockage de données d'utilisateur et pour déterminer l'authentification.

5. Carte d'authentification selon la revendication 4, comprenant un moyen de transmission de données d'image de visage (105) adapté pour transmettre des données d'image de visage de la personne à authentifier authentifiée à un lecteur adapté pour lire une date de la carte d'authentification.

6. Carte d'authentification selon la revendication 4 ou la revendication 5, dans laquelle ledit moyen de collation (102) est adapté pour ne pas transmettre un signal de permission d'authentification au lecteur qui lit une date de la carte d'authentification quand un temps prédéterminé s'écoule après l'authentification de ladite personne à authentifier.

7. Carte d'authentification selon l'une quelconque de la revendication 1 à la revendication 3, comprenant un moyen d'extraction de quantité de caractéristiques (110) adapté pour extraire la quantité de caractéristiques de l'image de visage capturée et pour transmettre la quantité de caractéristiques extraite au lecteur qui lit une date de la carte d'authentification.

8. Système d'authentification pour authentifier l'utilisation d'un système spécifique, comprenant :
A) une carte d'authentification selon la revendication 1, comprenant en outre :
un moyen de stockage de données d'utilisateur (103) ayant la quantité de caractéristiques du visage d'un utilisateur dudit système spécifique stockée à l'intérieur ;
un moyen de collation (102) adapté pour extraire la quantité de caractéristiques à partir de l'image de visage capturée, pour collationner la quantité de caractéristiques extraite avec la quantité de caractéristiques dudit moyen de stockage de données d'utilisateur et pour déterminer l'authentification ; et
un moyen de transmission de données d'image de visage (105) adapté pour transmettre des données d'image de visage de la personne à authentifier authentifiée ; et
B) un moyen d'enregistrement (5) adapté pour enregistrer les données d'image de visage de ladite personne à authentifier.

9. Système d'authentification selon la revendication 8,
dans lequel ledit moyen de collation (102) est adapté pour extraire la quantité de caractéristiques à partir de l'image de visage capturée, pour collationner la quantité de caractéristique extraite avec la quantité de caractéristiques dudit moyen de stockage de données d'utilisateur (103), et pour transmettre un temps de collation où une authentification peut être réalisée ; et
dans lequel ledit système d'authentification comprend un moyen (40) adapté pour recevoir ledit temps de collation, pour comparer ledit temps de collation au temps actuel et pour permettre l'authentification de ladite personne à authentifier quand une différence entre ceux-ci est dans une plage prédéterminée.

10. Système d'authentification pour authentifier l'utilisation d'un système spécifique, comprenant :
A) une carte d'authentification selon la revendication 1, comprenant en outre :
un moyen d'extraction de quantité de caractéristiques (110) adapté pour extraire la quantité de caractéristiques de l'image de visage capturée et pour transmettre la quantité de caractéristiques extraite ;
B) un moyen de stockage de données d'utilisateur (42) ayant la quantité de caractéristiques du visage d'un utilisateur dudit système spécifique stockée à l'intérieur ; et
C) un moyen de collation (41) adapté pour recevoir la quantité de caractéristiques de ladite personne à authentifier à partir de ladite carte d'authentification, pour collationner la quantité de caractéristiques reçue avec la quantité de caractéristiques dudit moyen de stockage de données d'utilisateur et pour déterminer l'authentification.

11. Procédé de guidage d'une carte d'authentification ayant un moyen d'imagerie qui représente par image un visage d'une personne à authentifier et comprend une lentille à foyer fixe n'ayant aucune fonction d'entraînement de lentille pour un réglage de zoom et de mise au point, et un moyen de guidage incluant au moins un émetteur de lumière (12a, 12b), le procédé comprenant :
la capture d'une image de visage d'une personne à authentifier;
le fait de déterminer, à partir d'informations de luminance de l'image de visage capturée, si une quantité de caractéristiques du visage de la personne à authentifier peut être extraite à partir de l'image de visage capturée ; et
la commande du moyen de guidage pour réaliser, si le visage de la personne à authentifier ne peut pas être extrait à partir de l'image de visage capturée, un guidage différent entre un moment où la luminance de l'image de visage capturée est supérieure à une limite supérieure et un moment où la luminance de l'image de visage capturée est inférieure à une limite inférieure,
dans lequel ledit guidage est réalisé par un éclairage de l'au moins un émetteur de lumière, un clignotement de l'au moins un émetteur de lumière, une couleur luminescente de l'au moins un émetteur de lumière ou une combinaison de ceux-ci,
le procédé comprenant en outre :
le fait de déterminer si une luminance et une taille de l'image de visage capturée ont un degré auquel au moins la quantité de caractéristiques du visage de la personne à authentifier nécessaire pour la collation d'une authentification,
la commande, si la luminance de l'image de visage capturée n'a pas le degré auquel au moins la quantité de caractéristiques du visage de la personne à authentifier nécessaire pour la collation d'une authentification, du moyen de guidage de manière à réaliser un guidage différent entre un moment où la luminance de l'image de visage capturée est supérieure à la limite supérieure et un moment où la luminance de l'image de visage capturée est inférieure à la limite inférieure, et
la commande, si la taille de l'image de visage capturée n'a pas le degré auquel au moins la quantité de caractéristiques du visage de la personne à authentifier nécessaire pour la collation d'une authentification, du moyen de guidage de manière à réaliser un guidage différent entre un moment où la taille de l'image de visage capturée est supérieure à une limite supérieure et un moment où la taille de l'image de visage capturée est inférieure à une limite inférieure.

12. Programme informatique comprenant des instructions qui, quand le programme est exécuté par un ordinateur d'une carte d'authentification, amènent l'ordinateur à mettre en œuvre le procédé selon la revendication 11.
